# EUROPEAN PATENT APPLICATION

(11) **EP 1 445 182 A2**
(43) Date of publication of application: **11.08.2004**
(21) Application number: 03445112.0
(22) Date of filing: 14.10.2003
(51) Int. Cl.: B62K 21/08

(54) **Damping device comprising inner and outer parts, together with process and application of such a damping device**

(30) Priority: 06.02.2003 SE 0300300
(71) Applicant: ÖHLINS RACING AB, 194 27 Upplands Väsby (SE)
(72) Inventor: Pitt, Joseph E., Stockton-on Teees, Cleveland TS 190RX (GB)
(74) Representative: Karlsson, Berne

(57) **Abstract**

A damping device comprises first and second inner parts (1, 2), which are designed to assume a united position in which the parts are rotatable in relation to one another in order to assume different reciprocal torsional positions. It also comprises an outer part (6) designed to entirely or partially enclose the inner parts in their united position. The inner parts comprise sections (1a, 2a), the external surfaces of which extend partially along a circular cross-section through the inner parts. In the said united position the inner parts together with an inner surface of the outer part form first and second spaces of sizes that vary as a function of the torsional positions. The spaces are connected to one another by one or more connections and hydraulic oil (14) is introduced into the spaces, the hydraulic oil being transferable between the spaces via the connections as a function of variations in the sizes of the spaces. The invention also relates to a process and an application in such a damping device.

## Description

The present invention relates to a damping device comprising first and second inner parts, which are designed to assume a united position in which the parts are rotatable in relation to one another in order to assume different reciprocal torsional positions, and an outer part designed to entirely or partially enclose the inner parts in their united position. The invention also relates to a process for the manufacture of such a damping device. In addition, the invention relates to an application of machined solid or tubular circular rod parts.

The use of so-called steering dampers for damping torsional movements between the front fork and frame on motor cycles and other vehicles, for example, was previously known. Reference may be made in this context to the steering dampers for motor cycles marketed by Öhlins Racing AB. The damping in question may be based on various principles, one of which that might be mentioned, for example, being a type that utilises the so-called wing damper principle. Another type functions with piston and cylinder and can be fitted as an external component to the vehicles in question.

There is a need to create more ample scope for installation on the vehicles in question (motor cycles), the desire being to utilise the spaces and locating points that are normally not used for other components. The desire also exists to exploit more protected positions and gain better access to adjustment and installation facilities. The invention achieves these and other objects, and among other things proposes that rounded circular shapes be guidable in outer tubes. There is also a desire to simplify manufacture (thereby making it less expensive), and to minimise the relative number of parts that go into a moreover very efficiently functioning steering damper. The invention also achieves these objects.

A damping device according to the invention is essentially characterized, among other things, in that the inner parts comprise sections, the outer surfaces of which extend partially along a circular cross-section through the inner parts and that the inner parts are designed so that in the aforementioned united position they form, together with an inner surface of the outer part, first and second spaces of sizes that vary as a function of the torsional positions. In addition, the device is characterized in that the said spaces are or can be connected to one another by one or more connections and that the spaces are designed to enclose one or more media (hydraulic oil, gas, mixtures thereof, etc.), which are or can be transferred via the connection or connections as a function of variations in the sizes of the spaces.

In developments of the idea of the invention, the sections have essentially sectoral shapes in the circular cross-section of the inner parts. The sections in the respective torsion limit positions may be capable of interacting with one another via radially extending parts of the sectoral shape, so that in a first torsion limit position the first space assumes maximum size and the second space assumes zero size and in the second torsion limit position the second space instead assumes maximum size and the first space assumes zero size. The inner parts may be formed with cylindrical sections, to which the sections with outer surfaces extending partially along the circular cross-section are connected or fixed. In a preferred embodiment the sections form part of a single machined piece. The sections of the inner parts may preferably be provided with stop surfaces that define the united position of the inner parts. Connected to the said spaces are one or more connections, which unite the spaces so that in the event of variations in the sizes of the spaces due to reciprocal torsion between the inner parts, a medium or media is/are able to pass from one space to the other, and vice-versa. The connections in question may take the form of one or more ducts in the inner and/or outer parts.

In a preferred embodiment one of the inner parts comprises a guide part extending centrally in the longitudinal direction of the said inner part and capable of interacting with one or more recesses in the second or the first inner part when the parts are brought together into the united position. In one embodiment the first or second inner part may also comprise a bearing part having a circular cross-section and extending centrally in the longitudinal direction of the said inner part, around which bearing part the second or the first inner part can rotate between the various torsional positions. In one embodiment a tubular or solid part having a circular cross-section may form both bearing part and guide part. The tubular or solid part can thereby interact with or be introduced into a recess in the second or first inner part extending centrally and in the longitudinal direction of the said inner part. In the case of the tubular or solid part, the second or the first inner part may be capable, when performing the torsional function, of interacting with the tubular or solid part via a centrally arranged longitudinal recess.

The said connection or connections and/or the said duct or ducts may comprise one or more passages with adjustable media through-flow area(s). The adjustment can thereby be performed manually by means of a wheel-shaped member, for example. In one embodiment the damping device is used in motor cycles, the damping device being applied to the steering tube of the motor cycle. The first inner part can in this case be connected to an upper steering head and the second inner part can be connected to a lower steering head. The first and/or second inner part can be connected to the upper or lower steering head respectively by way of the outer part.

A process for the manufacture of a damping device comprising first and second inner parts, which in the united position are rotated in relation to one another in order to assume different reciprocal torsional positions, and an outer part entirely or partially enclosing the inner part in the united position may be regarded as being characterized by a number of different stages. In a first stage, a machined solid or tubular rod having a circular (round) cross-section is divided in its longitudinal direction into two rod parts. In a second stage the rod parts are shaped with first sections, external surfaces of which extend partially along the circular or round cross section, and with solid or tubular second sections of circular or round external cross-section essentially corresponding to the round external cross-section of the rod, the rod parts subsequently being used as the aforementioned first and second outer parts. In a third stage the first and second inner parts are assigned to the united position. In a fourth stage prior to, following or simultaneously with the manufacture of the inner parts, the outer part is manufactured or designed with an internal recess of circular cross-section or rounded shape, which corresponds with substantial accuracy to the circular or round external dimensions of the inner parts. In a fifth stage the united inner parts are fitted into the internal recess in the outer part, thereby forming the spaces which vary as a function of the reciprocal torsional positions of the inner parts between the first and second sections and the inner recess wall of the outer part. Finally one or more media (hydraulic oil, gas, etc.) are introduced and confined in the spaces and transferred via one or more connections between the spaces as a function of the assigned reciprocal torsional positions of the inner parts.

Embodiments of the process are set forth in the succeeding subordinate claims to the independent process claim.

An application of machined solid or tubular rod parts of circular or round cross-section can essentially be characterized in that the rod parts are used for the production of rotatable first and second inner parts, forming part of a damping device, which are enclosed by an outer part in order to form media spaces, the sizes of which vary as a function of the reciprocal torsional positions of the inner parts.

In accordance with the description above, a ground, solid or tubular and round rod (at least in respect of the external dimension) may be used as basic material for the manufacture of the inner parts of the damping device. In addition, a tubular and likewise machined outer tube may form an integral part and be adapted by known, conventional processing methods to the inner parts with accuracy requirements which provide a bearing for the inner parts and allow them to rotate in the outer tube, whilst the spaces formed for medium can function as well-sealed spaces for the medium or media. The ducting system or connection system can easily be arranged in the part in question (the inner and/or outer parts) and conventional needle or adjusting members for adjustment of the various through-flow areas for the medium when this is moved from one space to the other can be used. Two or more chambers or spaces can be provided and the rotatability between the torsion limit positions facilitated. The rotational function can likewise be facilitated by bearing members, which can also serve as guide members when the inner parts are brought together. The new damping device will thus comprise relatively few parts, which simplifies the technical assembly and makes it less expensive to manufacture.

A currently proposed embodiment of a device, a process and an application having the significant characteristics of the invention will be described below with reference to drawings attached, in which
- Figure 1: shows horizontal views of first and second inner parts,
- Figure 1a: shows a section A-A through one inner part,
- Figure 1b: shows a section B-B through the other inner part,
- Figure 2: shows a horizontal view of the inner parts rotated through 90° in comparison to figure 1,
- Figure 3: shows a longitudinal section through the inner parts in the united position and fitted inside an outer part, which is in turn fitted in a tubular member (e.g. a steering tube of a motor cycle),
- Figure 4: in an enlargement of figure 3 shows connections or ducts between the spaces formed by the inner and outer parts according to figure 3, and manually actuatable members arranged in the duct for adjusting the through-flow passage in the ducts.
- Figure 5: shows a cross-section through the inner parts in a first reciprocal torsional position, in which an initiated rotation causes medium to flow from one space to the other space via the connection or connections and the regulating member,
- Figure 6: shows in cross-section how the sizes of the spaces vary as a function of the torsional position assumed between the inner parts,
- Figure 7: shows in cross-section a first torsional limit position in which one space assumes zero size and the other space assumes maximum size,
- Figure 8: shows in cross-section the second torsional limit position in which one space assumes maximum size and the other space assumes zero size,
- Figure 9: shows a basic side view of the location of the damping device in a steering tube with upper and lower steering heads on a symbolically indicated frame and symbolically indicated front fork of a motor cycle,
- Figure 10: shows a longitudinal view of parts of a basic material in the form of a machined round rod for manufacture of the inner parts and a machined outer tube for manufacture of an outer part, and
- Figure 11-12: shows vertical views of second embodiment of first and second inner parts different from the embodiment of Figures 1-2.

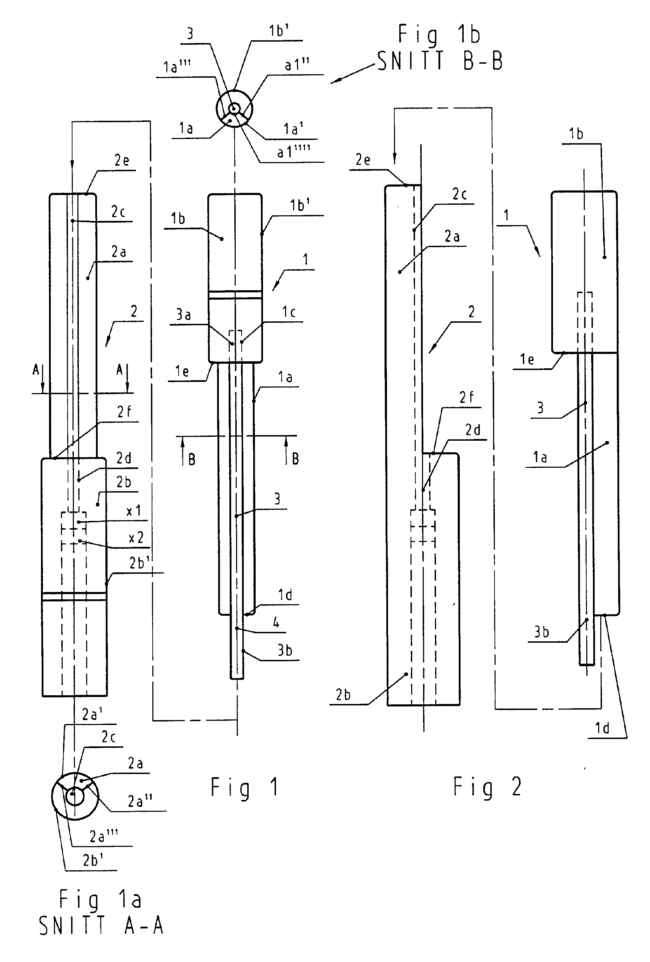

In figure 1 a first inner part is denoted by 1 and a second inner part by 2. Each inner part has a first section 1a and 2a respectively and a second section 1b and 2b respectively. As will be seen from figures 1a and 1b, the first sections 1a and 2a form sectoral shapes in respective cross sections. Each sector has an external surface 1a' and 2a' respectively and parts 1a", 1a"' and 2a", 2a"' extending radially. The second section has a circular or round cross-section 1b' and 2b' respectively. The sector-shaped sections 1a and 2a thereby have external surfaces 1a' and 2a', which adjoin the circular shape 1b' and 2b' respectively of the second section. It will be appreciated here that each inner part can be manufactured from a single rod material of circular or round cross-section and that the said sector-shaped parts 1a and 2a are manufactured by milling away or removing material from the basic material in the form of a rod. The first inner part 1 is provided with a combined steering and locking member 3, which extends in the longitudinal direction of the part 1. The member is located centrally and has the same central axis 4 as the first unit 1. The member 3 may be formed as a round tube which is supported in the unit 1 in a recess 1c in the unit. The member 3 is therefore provided with a bearing part 3a at its first end. In one embodiment, the bearing member is arranged in a recess 1a'''' in the inner parts of the sector-shaped part. At its other end, the member 3 is provided with a bearing part 3b, which projects outside the end surface 1d of the first part. The first inner part also has a shoulder surface 1e at the transition between the first and the second sections 1a and 1b. The second section 2a is provided with a depression, preferably a curved depression 2c, which adjoins the outer rounded tubular shape of the member 3. The depression therefore serves as a bearing notch for the member 3. The inner part 2 is also provided with a recess 2d in the section 2b. The recess 2d functions as guide recess for the member 3 on the first inner part 1, the free end 3b of which can be introduced into the recess 2d when the first and second inner parts are brought together. The section 2a is provided with an end surface 2e and the section 2b is provided with a shoulder 2f.

Reference is also made to figure 2, in which the inner parts 1a, 1b and 2a, 2b have been rotated through 90° in relation to the positions according to figure 1. The depression 2c in the section 2a can be seen, as can the recess 2d and the end surface 2f. Also visible are the member 3 with its free end 3b and the stop surface 1b. The parts 1 and 2 can be brought together in the direction indicated by 5. The part 1 is thus applied with the end 3b against the recess 2c with simultaneous telescoping or bringing together of the parts. The member 3 and the recess 2c thereby serve as guides for the telescoping movement and the part 3b can mount the recess 2d during the final telescoping sequence. This mounting produces a fundamentally rigid connection between the parts in the longitudinal direction. In the combined position, moreover, a rotatable connection exists. In the rotational function the member 3 serves as pivot bearing and the inner parts can be rotated to different torsional positions by means of the pivot bearing 3 and the recess 2c. The end surfaces 1e and 2f form limit stops for the telescoping movement between the inner parts 1 and 2. The parts 1a", 1a"' and 2a", 2a''' extending radially form torsion limit stops for the reciprocal torsional movements of the parts. At the said stops the parts of the sector-shaped sections extending radially interact in pairs. It must be noted here that one of the parts in figure 1 must be rotated through 180° before the parts can be brought together, cf. the situation in figure 2. In the torsion limit position, therefore, the part 1a" will interact with the part 2a"' and 1a"' with the part 2a''. At the said limit stop, the stop surface 1e on the first part 1 interacts with the end surface 2e on the second part, and the stop surface 2f on the part 2 with the end surface 1d on the part 1.

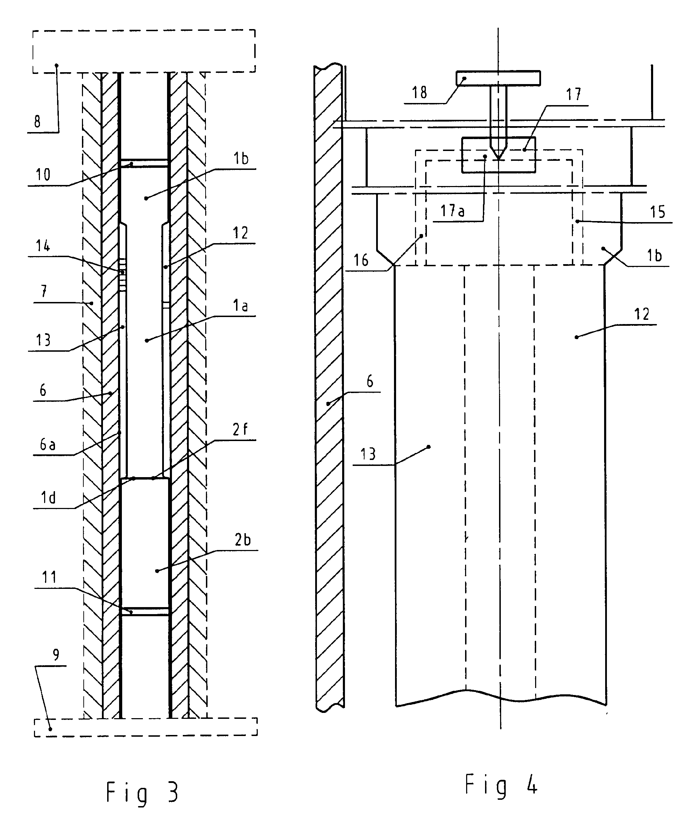

In figure 3 the inner parts are shown in the combined position, which according to the above is defined, among other things, by the end surface 1d on the first section 1a and 2f on the second section 2b. The united parts are arranged in an outer tube 6, which encloses the inner parts in a recess 6a. With their external dimensions the sector-shaped sections 1a (and 2a according to the above) connect very accurately with the said recess 6a. In one exemplary embodiment according to figure 3, the damping device formed by the inner and outer parts is arranged in a steering tube 7 of a motor cycle (not shown). The parts are connected to upper and lower steering heads 8, 9 in a manner known in the art. Since the invention is not directly dependent upon the structures of the steering tube and steering heads, these will not be described in more detail here, but reference will be made to the steering tubes and steering heads encountered on the market and to the fasteners and fastening principles used for this purpose. The steering tube and steering heads on the familiar Yamaha R1 motor cycle may be cited as an example. The sections 1b and 2b are provided with sealing rings 10 and 11, which form a seal against the wall of the recess 6a. By means of the arrangement, spaces 12 and 13, which in the aforementioned exemplary embodiment may be regarded as having varying sectoral shapes, cf. also below, are obtained between the outsides of the inner parts and the inner wall of the outer part. The rotatability of the inner parts in the outer part therefore means that the spaces 12 and 13 vary in size as a function of the reciprocal torsional positions between the first and second inner parts (cf. 1 and 2 above). According to the invention, the spaces are to be filled with medium used in the context of damping, for example hydraulic oil with conventional additives, gas, etc. Due to the variations in the sizes of the spaces 12, 13, according to the invention the said medium is transferred between the spaces as a function of the reciprocal torsional positions of the inner parts.

According to figure 4, the medium is transferred between the spaces 12 and 13 via ducts 15, 16, which in this case are arranged in the section 1b and in the outer tube 6 or in part connected to the said outer tube. Connected to the ducts or to the connection 15, 16 formed by the ducts is a regulating member 17, by means of which the area of the through-flow passage 17a can be adjusted with the aid of a manual regulating member 18. The regulating member 17, and the manual member 18 may be of conventional type and will therefore not be described in more detail here. According to the above, a substantial mating accuracy exists between the inner and outer parts, ensuring that the medium does not leak out. In order to prevent external leakage of medium, use is made of the said sealing rings 10 and 11, which may be of a type known in the art.

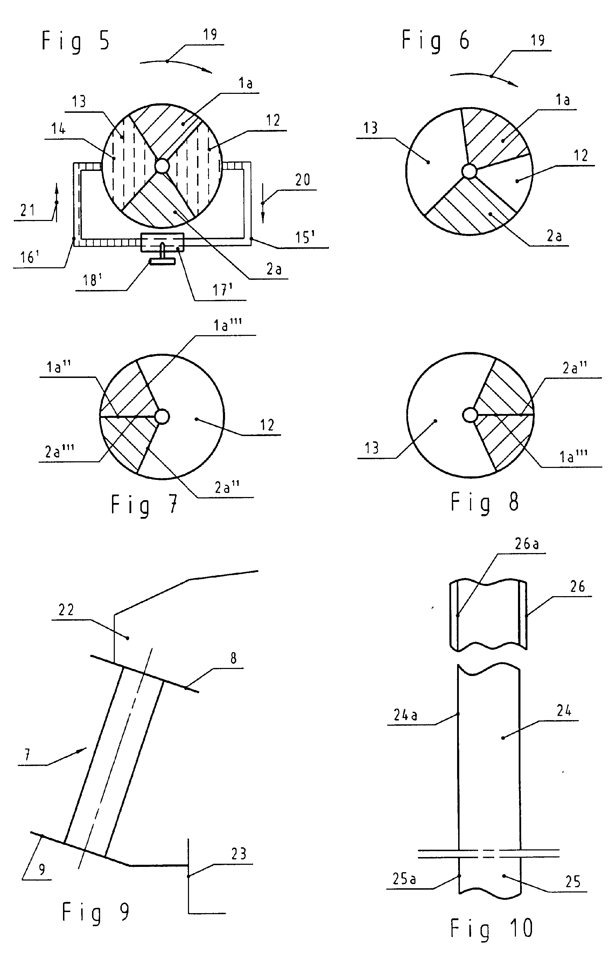

Figure 5 shows a basic view of the sector-shaped parts 1a and 2a where these assume a middle position in respect of the torsional movement. In the event of a reciprocal torsional action resulting in movement of the section 1a relative to 2a in the direction of the arrow 19, medium 14 in the reduced space 12 is displaced over to the increasing space 13 via the ducts 15', 16' and the regulating member 17', 18'. The damping can therefore vary through adjustment of the member 18'. The direction of the medium in figure 5 is shown by 20 and 21. If the section 1a is acted upon in the opposite direction to the direction 19, medium is transferred from the thereby diminishing space 13 to the increasing space 12 in opposite directions to the directions 20, 21. It will be appreciated that the damping can be modified by influencing of the through-flow area in the regulating device 17'.

Figure 6 is intended to show the stage at which the space 12 has been reduced in relation to the situation in the stage according to figure 5, and the space 13 correspondingly increased.

Figures 7 and 8 show the torsional limit positions in which the space 13 assumes zero size and the space 12 assumes its maximum size or the space 13 assumes its maximum size and the space 12 assumes zero size. In the stage according to figure 7, the radial parts 1a" and 2a" of the shapes interact with one another. In the case according to figure 8, the straight parts 2a" and 1a"" of the sectoral shapes interact with one another.

Figure 9 shows a basic view of the steering tube 7 with associated steering heads 8 and 9 fitted to a frame 22 and a front-wheel fork 23 on a motor cycle, not shown further, such as a motor cycle of the said type.

Figure 10 shows a basic material in the form of machined (ground) round rods 24, 25 having circular or round external dimensions. The rod parts may take the form of solid material or take a tubular form. From this material the inner parts in question are manufactured by milling out the aforementioned sector-shaped parts. The external dimensions of the sector-shaped parts or sections are connected to the aforementioned second sections with great accuracy. Boring in the material for the aforementioned bearing recesses can be performed with relative ease. The tubular guide and bearing part can be applied to the first part and the second part can be provided with the longitudinal, curved guide slot (cf. 2c in figure 1). In this way a circular shape is obtained as guide inside an outer part 26, which may take the form of a conventional tube, the inside wall 26a of which is machined with the same accuracy as the external surfaces 24a, 25a on the rod parts or inner parts. The mating accuracy between external surfaces 24a, 25a and the inner surface 26a may be selected between 2/100 mm and 6/100 mm. The ducting system and needle or regulating member arrangement can be conventionally arranged in the inner and/or outer parts by means known in the art.

Figures 1 and 2 also discloses a chamber x1, in which oil is applied. The oil in said chamber is connected with the oil included in the device. A movable (floating) piston is shown by x2. The piston attain a pressure on the oil in said chamber by means of pressure obtaining devices not disclosed in Figures 1 and 2, but, for example, can comprise a spring(s), pressure generating devices, etc. For example a gas or medium pressure can be arranged beneath the piston. The damper will in such a way work preferable pressure function or a pressure generating function which keeps the medium pressure of the medium (the oil), which is conducted or transferred between the parts via the regulating member, on the adjusted value independent of factors which otherwise could change the pressure and in a negative way affect the damping function of the damper.

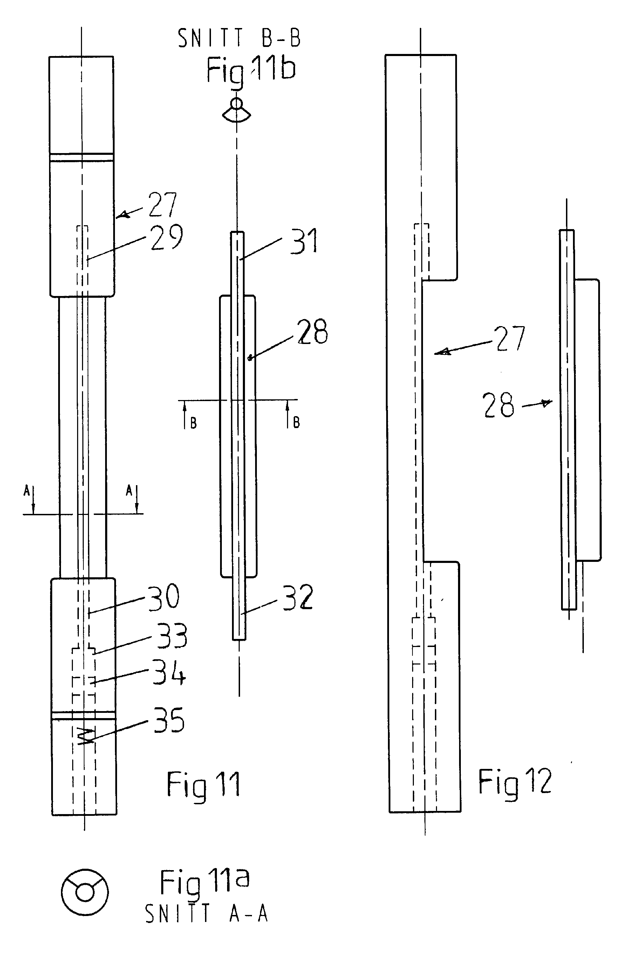

Figures 11, 11a, 11b and 12 show separation of parts 27, 28, which can be put together, compare above. The parts may be made by individually produced parts which are assembled. The part 27 has bearings 29, 30 to pins 31, 32 applied on the part 28. The chamber is here shown with 33 and the piston with 34. Pressure causing device in the shape of a spring is symbolized with 35. By means of this arrangement can oil/medium transferred between the side spaces 1 and 2 via the needle/adjustment member 18 be kept pressurized to the wished or set value. The device is in such a way independent of temperature variations in or around the device.

The invention is not limited to the embodiments shown above by way of example, but lends itself to modifications without departing from the scope of the following claims and the idea of the invention.

## Claims

1. Damping device comprising first and second inner parts (1, 2), which are designed to assume a united position in which the parts are rotatable in relation to one another in order to assume different reciprocal torsional positions, and an outer part (6) designed to entirely or partially enclose the inner parts in their united position, **characterized in that** the inner parts (1, 2) comprise sections (1a, 2a), the outer surfaces of which extend partially along a circular cross-section through the inner parts, that the inner parts are designed so that in the said united position they form, together with an inner surface (6a) of the outer part, first and second spaces (12, 13) of sizes that vary as a function of the torsional positions, that the said spaces are or can be connected to one another by one or more connections (15, 16) and that the spaces are designed to enclose one or more media (14), which are or can be transferred via the connection or connections as a function of variations in the sizes of the spaces.

2. Damping device according to Claim 1, **characterized in that** the sections (1a, 2a) have essentially sectoral shapes in the circular cross-section of the inner parts, and that the sections in the respective torsion limit positions are capable of interacting with one another via radially extending parts of the sectoral shape, so that in the first torsion limit position the first space assumes maximum size and the second space assumes zero size and in the second torsion limit position the second space assumes maximum size and the first space assumes zero size.

3. Damping device according to Claim 1 or 2, **characterized in that** the inner parts (1, 2) have cylindrical sections (1b, 2b), to which the sections (1a, 2a) with external surfaces (1a', 2a') extending partially along the circular cross-section are connected, or with which they form a common unit, and that the said sections are provided with stop surfaces (1d, 2f and 1e, 2e), which define the united position of the inner parts.

4. Damping device according to Claim 3, **characterized in that** the cylindrical sections (1b, 2b) are provided with one or more internal ducts, which form or form part of the said connection(s) (15, 16).

5. Damping device according to any of the preceding claims, **characterized in that** the first or the second inner part comprises a guide part extending centrally in the longitudinal direction of the said inner part and capable of interacting with one or more recesses in the second or the first inner part when the parts are brought together into the united position.

6. Damping device according to any of the preceding claims, **characterized in that** the first or second inner part comprises a bearing part (3) extending centrally in the longitudinal direction of the said inner part and having a circular cross-section, around which bearing part the second or the first inner part can rotate between the various torsional positions.

7. Damping device according to Claim 6, **characterized in that** a tubular or solid part having a circular or round cross-section forms both bearing part and guide part, that the tubular or solid part, by way of its end (3b), is capable of interacting with or can be introduced into a recess in the second or first inner part extending centrally and in the longitudinal direction of the said inner part, and that in performing the torsional function the second or the first inner part interacts with the tubular or solid part via a centrally arranged longitudinal recess.

8. Damping device according to any of the preceding claims, **characterized in that** the connection(s) comprise(s) a passage (17a) of adjustable medium through-flow area.

9. Damping device according to any of the preceding claims, **characterized in that** the connection(s) comprise(s)one or more valves or needles adjustable by means of a manually actuatable member (18) in order to provide the required medium through-flow via the said valve or needle.

10. Damping device according to any of the preceding claims, **characterized in that** the outer part with inner parts united is connected to two parts (22, 23), moveable in relation to one another, movements of which are to be damped.

11. Damping device according to any of the preceding claims, **characterized in that** the outer part with inner parts united is arranged in a steering tube (7) of a motor cycle, and that the first inner part is connected to an upper steering head linked to the motor cycle frame and the second inner part is connected to a lower steering head linked to a front fork.

12. Damping device according to Claim 11, **characterized in that** the first or second inner part is connected to the upper or lower steering head respectively by way of the outer part (6).

13. Damping device according to any of the preceding claims, **characterized in that** it is provided with pressure generating arrangement (for example 33, 34, 35) which keeps the medium/oil pressurized on an adjusted value independent of temperature variations in or around the damper.

14. Process for the manufacture of a damping device comprising first and second inner parts (1, 2), which in the united position are rotated in relation to one another in order to assume different reciprocal torsional positions, and an outer part (6) entirely or partially enclosing the inner parts in the united position, **characterized in that**
a) a machined solid or tubular rod having a circular cross-section is divided in its longitudinal direction into two rod parts (24, 25),
b) the rod parts are shaped with first sections (1a, 2a), external surfaces (1a', 2a') of which extend partially along the circular cross section, and with solid or tubular second sections (1b, 2b) of circular cross-section essentially corresponding to the cross-section of the rod, and that the rod parts can be partially used as the said first and second outer parts,
c) the first and second inner parts are assigned to the united position,
d) prior to, following or simultaneously with the manufacture of the inner parts, the outer part (26) is manufactured or designed with an internal recess (26a) having a circular cross-section, which corresponds with substantial accuracy to the circular external dimensions of the inner parts,
e) the united inner parts are fitted into the internal recess in the outer part, thereby forming the spaces which vary as a function of the reciprocal torsional positions of the inner parts between the first and second sections and the recess wall (26a) of the outer part.
f) one or more media (14) are introduced (confined) in the spaces and transferred via one or more connections (15, 16) between the spaces as a function of the assigned reciprocal torsional positions of the inner parts.

15. Process according to Claim 14, **characterized in that** the first or second rod part is provided with a bearing part arranged centrally in the longitudinal direction of the rod part, around which bearing part the second or the first rod part is rotated under imparted reciprocal torsional movements of the inner parts, the second or the first rod part being provided with a longitudinal recess or depression for the bearing part.

16. Process according to Claim 14 or 15, **characterized in that** the bearing part is designed with a front part which serves as guide part when the inner parts are telescoped into the united position, and that the second or the first inner part is designed with a recess capable of interacting with the said guide part.

17. Use of machined solid or tubular rod parts (24, 25), **characterized in that** the rod parts are used for the production of rotatable first and second inner parts, forming part of a damping device, which are enclosed by an outer part (26) in order to form spaces for medium, the sizes of which spaces vary as a function of the reciprocal torsional positions of the inner parts.
